# EUROPÄISCHE PATENTSCHRIFT

(11) **EP 0 988 187 B1**
(45) Veröffentlichungstag und Bekanntmachung des Hinweises auf die Patenterteilung: **06.02.2002**
(21) Anmeldenummer: 98913518.1
(22) Anmeldetag: 21.02.1998
(51) Int. Cl.: B60R 22/18

(54) **KLEMMVORRICHTUNG FÜR EINEN SICHERHEITSGURT EINES KRAFTFAHRZEUGS**
AUTOMOTIVE SEAT BELT CLAMPING DEVICE
DISPOSITIF DE BLOCAGE POUR CEINTURE DE SECURITE D'UN VEHICULE AUTOMOBILE

(30) Priorität: 12.06.1997 DE 19724876
(43) Veröffentlichungstag der Anmeldung: 29.03.2000
(73) Patentinhaber: ROBERT BOSCH GMBH, 70442 Stuttgart (DE)
(72) Erfinder: MEDER, Klaus, Tomioka-shi 37023 (JP)
(86) Internationale Anmeldenummer: DE9800526
(87) Internationale Veröffentlichungsnummer: WO9856625

(56) Entgegenhaltungen:
- WO-A-89/01430
- DE-A- 3 328 127
- FR-A- 2 620 669

## Beschreibung

### Stand der Technik

Die vorliegende Erfindung betrifft eine Klemmvorrichtung für einen Sicherheitsgurt eines Kraftfahrzeugs, welche den Sicherheitsgurt bei einem Bremsvorgang arretiert. Wie zum Beispiel aus der DE 39 04 668 A1 hervorgeht, gehören zu einem in einem Kraftfahrzeug angeordneten Insassen-Rückhaltesystem neben Airbags auch Sicherheitsgurte, die mit einem Gurtstraffer ausgestattet sind. Die Sicherheitsgurte zusammen mit Gurtstraffern sorgen dafür, daß die Fahrzeuginsassen bei einem Unfall auf ihren Fahrzeugsitzen gehalten werden, wodurch sich das Verletzungsrisiko verringert.

Die DE 37 37 554 A1 beschreibt eine Auslösevorrichtung für Airbags und Gurtstraffer, die mit mehreren Sensoren versehen ist, welche auf eine Verformung und Beschleunigung des Fahrzeugs reagieren. Um die Entscheidung für das Auslösen einer Sicherheitseinrichtung (Airbag, Gurtstraffer) möglichst sicher und zuverlässig treffen zu können, sieht dieser Stand der Technik vor, dem Auslöseprozessor zusätzlich noch Informationen über Bremsmanöver einzugeben und auszuwerten. Diese Bremsmanöver-Informationen beschreiben das kinetische Verhalten des Fahrzeugs vor und während eines Unfalls, woraus der Auslöseprozessor Steuersignale für die einzelnen Rückhaltesysteme im Fahrzeug ableitet.

Die Zündung der Gurtstraffer erfolgt gemäß dem Stand der Technik gemeinsam mit den Airbags. Durch ein dem Unfall im allgemeinen vorausgehendes Bremsmanöver werden die Insassen, das betrifft vor allem den Beifahrer, nach vorne in Richtung der Airbageinheit geneigt. Wie mittlerweile Erfahrungen gezeigt haben, besteht bei einer zu geringen Distanz des Fahrzeuginsassen gegenüber dem Airbag eine große verletzungsgefahr, wenn es zu einer Auslösung des Airbags kommt.

Aus der WO 89/01430 ist eine Klemmvorrichtung für einen Sicherheitsgurt bekannt, welche bei einer starken Bremsung arretiert wird. Dabei wird aus einem Zylinder ein Luftdruck aufgebaut, der einen Kolben gegen eine Federkraft in Bewegung versetzt, und aufgrund der Kolbenbewegung über ein Gestänge eine Gurtklemme außerhalb des Zylinders gesperrt. Es handelt sich hierbei um eine mechanisch aufwendige Anordnung.

Der Erfindung liegt daher die Aufgabe zugrunde, eine Klemmvorrichtung der eingangs genannten Art anzugeben, die eine kompakte und mit möglichst geringem Aufwand realisierbare Bauform aufweist.

### Vorteile der Erfindung

Gemäß dem Anspruch 1 wird die genannte Aufgabe dadurch gelöst, daß die Klemmvorrichtung aus einem Zylinder besteht, in dem ein erster und ein zweiter Kolben verschiebbar gelagert sind, daß der Sicherheitsgurt durch Schlitze in der Zylinderwand, quer zur Zylinderachse zwischen den beiden Kolben hindurchgeführt ist, daß auf den ersten Kolben eine vom Bremsdruck abhängige Kraft wirkt und daß auf den zweiten Kolben eine dem Bremsdruck entgegenwirkende Kraft gerichtet ist. Mit dieser Klemmvorrichtung wird verhindert, daß ein Fahrzeuginsasse während des Bremsmanövers vor einem bevorstehenden Crash in Richtung des vor ihm befindlichen Airbags gebeugt wird. Der Sicherheitsgurt hält also den Insassen vor dem Crash in einer Position, in der eine Auslösung des Airbags für den Insassen nicht gefährlich werden kann.

Vorteilhafte Weiterbildungen der Erfindung gehen aus den Unteransprüchen hervor. So ist es zweckmäßig, daß die Klemmvorrichtung bei Überschreiten einer ersten Bremmsdruckschwelle den Sicherheitsgurt in seiner augenblicklichen Auszugslänge festklemmt und daß sie bei Überschreiten einer zweiten Bremsdruckschwelle, welche höher ist als die erste, den Sicherheitsgurt strafft.

Die Kraft auf den ersten Kolben kann entweder durch eine Hydraulik oder Pneumatik oder durch einen elektromagnetischen Steller, der vom Bremsdruck gesteuert wird, ausgeübt werden.

### Beschreibung eines Ausführungsbeispiels

Anhand eines in der Zeichnung dargestellten Ausführungsbeispiels wird nachfolgend die Erfindung näher erläutert. Es zeigen:
Figuren 1a - 1d verschiedene Stellungen von Kolben in einem Zylinder der Klemmvorrichtung und
Figur 2 einen Verlauf des Kolbenhubs der Klemmvorrichtung.

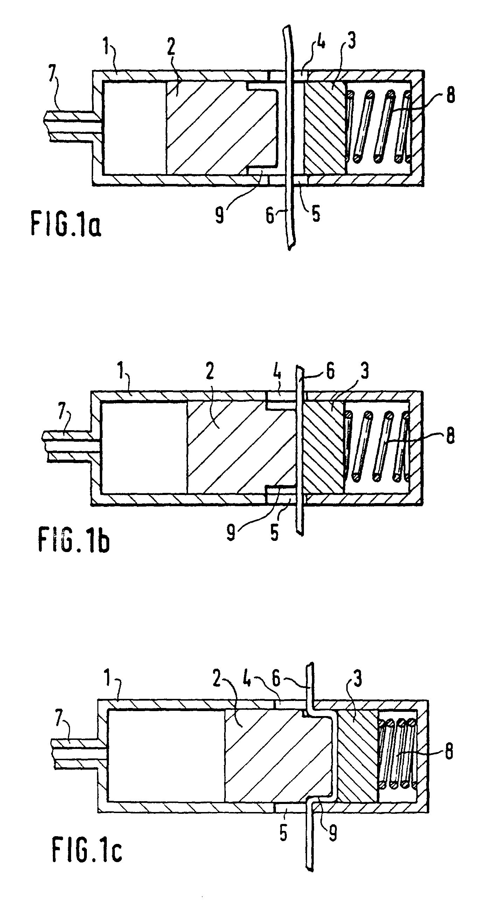

Die in den Figuren 1a - 1d in einem Längsschnitt dargestellte Klemmvorrichtung für einen Sicherheitsgurt besteht aus einem Zylinder 1, in dem zwei Kolben 2 und 3 in Längsrichtung des Zylinders verschiebbar gelagert sind. In der Zylinderwandung befinden sich zwei einander gegenüberliegende Schlitze 4 und 5, durch die ein Sicherheitsgurt 6 zwischen den beiden Kolben 2 und 3 hindurchgeführt ist.Der Zylinder 1 ist mit der Karosserie des Fahrzeugs kraftschlüssig verbunden. Zweckmäßigerweise bildet er eine Baueinheit mit dem Aufrollmechanismus des Sicherheitsgurtes 6.

Der Kolben 2 im Zylinder 1 wird von einer vom Bremsdruck abhängigen Kraft in Richtung des Sicherheitsgurtes 6 verschoben. Diese Kraft wird von einem an den Anschlußstutzen 7 anschließbaren Hydraulik- oder Pneumatikkreis aufgebracht, der mit dem Bremskreis gekoppelt ist. Der auf den Kolben 2 wirkende Druck ist also proportional zum Bremsdruck. Der zweite Kolben 3 wirkt als Gegenlager für den Kolben 2. Der Kolben 3 wird von einer Feder 8 abgestützt, die dem Bremsdruck auf den Kolben 2 entgegenwirkt. Der Kraftaufwand des Kolbens 2 kann auch von einem elektromagnetischen Steller ausgeübt werden, der vorzugweise ein vom Bremsdruck gesteuerter Elektromagnet oder ein Elektromotor mit Lineargetriebe ist.

In der Figur 1a ist der Kolben 2 in seiner Ausgangslage gezeichnet, die er einnimmt, wenn bei einem Bremsvorgang der Bremsdruck unterhalb einer ersten Bremsdruckschwelle bleibt. In diesem Fall läuft der Sicherheitsgurt 6 frei zwischen den beiden Kolben 2 und 3 hindurch.

Überschreitet nun der Bremsdruck diese erste Schwelle, so bewegt sich der Kolben 2, wie in Figur 1b dargestellt, auf den Kolben 3 zu. Bei diesem Bremsdruck weicht der Kolben 3 auf Grund der Federkraft 8 dem Druck durch den Kolben 2 nicht aus, so daß der Sicherheitsgurt 6 zwischen den beiden Kolben 2 und 3 in seiner augenblicklichen Auszugslänge festgeklemmt wird.

Wird der Bremsdruck weiter erhöht, so daß er eine zweite Bremsdruckschwelle übersteigt, so gibt, wie in Figur 1c dargestellt, der Kolben 3 dem Druck des Kolbens 2 nach und es wird ein Stück des Sicherheitsgurtes 6 zwischen den beiden Kolben 2 und 3 in den Zylinder hineingezogen. Es kommt also in diesem Fall zu einer Straffung des Sicherheitsgurtes 6. Der Kolben 2 besitzt an seinem gurtseitigen Ende eine Einschnürung 9, damit der Sicherheitsgurt 6 beim Einzug in den Zylinder zwischen der Zylinderwand und dem Kolben 2 verlaufen kann.

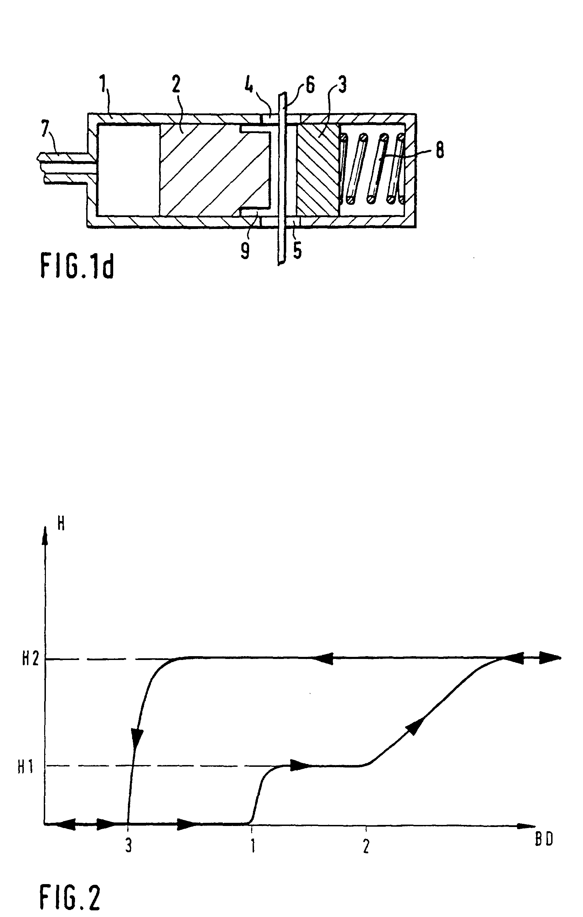

Sinkt nun, wie in Figur 1d dargestellt, der Bremsdruck unterhalb einer Schwelle, die kleiner ist als die erste Bremsdruckschwelle, ab, so nimmt der Kolben 2 wiederum seine in Figur 1a gezeigte Ausgangsstellung an, bei der der Gurt 6 nicht mehr arretiert ist.

In der Figur 2 ist nochmals der Verlauf des Hubes H des Kolbens 2 in Abhängigkeit vom Bremsdruck BD dargestellt. Dabei ergibt sich ein hystereseartiger Verlauf. Bei Übersteigen einer Bremsdruckschwelle 1 verschiebt sich der Kolben 2 um einen Hub H1. Wird der Bremsdruck BD erhöht, so steigt der Hub H ab einer Bremsdruckschwelle 2 allmählich auf einen Hub H2 an. Fällt anschließend der Bremsdruck wieder ab, so bleibt die Stellung des Kolbens 2 mit dem Hub H2 so lange erhalten, bis der Bremsdruck BD eine Schwelle 3 erreicht, die unterhalb der Bremsdruckschwelle 1 liegt.

Die auf den Gurt wirkenden Klemm- und Reibungskräfte können noch durch Hebel- und/oder Umlenkvorrichtungen verstärkt werden.

## Patentansprüche

1. Klemmvorrichtung für einen Sicherheitsgurt eines Kraftfahrzeugs,welche den Sicherheitsgurt (6) bei einem Bremsvorgang arretiert, **dadurch gekennzeichnet, daß** sie aus einem Zylinder (1) besteht, in dem ein erster und ein zweiter Kolben (2, 3) verschiebbar gelagert sind, daß der Sicherheitsgurt (6) durch Schlitze (4, 5) in der Zylinderwand, quer zur Zylinderachse zwischen den beiden Kolben (2, 3) hindurchgeführt ist, daß auf den ersten Kolben (2) eine vom Bremsdruck (BD) abhängige Kraft wirkt und daß auf den zweiten Kolben (3) eine dem Bremsdruck (BD) entgegenwirkende Kraft (8) gerichtet ist.

2. Klemmvorrichtung nach Anspruch 1, **dadurch gekennzeichnet, daß** sie bei Überschreiten einer ersten Bremsdruckschwelle den Sicherheitsgurt (4) in seiner augenblicklichen Auszugslänge festklemmt und daß sie bei Überschreiten einer zweiten Bremsdruckschwelle, welche höher ist als die erste, den Sicherheitsgurt (6) strafft.

3. Klemmvorrichtung nach Anspruch 1 und 2, **dadurch gekennzeichnet, daß** die dem Bremsdruck (BD) entgegenwirkende Kraft (8) so groß ist, daß bei Überschreiten der zweiten Bremsdruckschwelle der erste Kolben (2) den zweiten Kolben (3) so weit verschiebt, daß der zwischen beiden Kolben (2, 3) eingeklemmte Sicherheitsgurt (6) gestrafft wird.

4. Klemmvorrichtung nach Anspruch 1, **dadurch gekennzeichnet, daß** eine Hydraulik oder Pneumatik die vom Bremsdruck (BD) abhängige Kraft auf den ersten Kolben (2) ausübt.

5. Klemmvorrichtung nach Anspruch 1, **dadurch gekennzeichnet, daß** ein elektromagnetischer Steller, vorzugsweise ein Elektromagnet oder ein Elektromotor mit Lineargetriebe, der vom Bremsdruck (BD) gesteuert wird, eine Kraft auf den ersten Kolben (2) ausübt.

## Claims

1. Clamping device for a motor-vehicle safety belt, which arrests the safety belt (6) during a braking operation, **characterized in that** it comprises a cylinder (1) in which a first and a second piston (2, 3) are mounted in a displaceable manner, **in that** the safety belt (6) is guided, through slots (4, 5) in the cylinder wall, between the two pistons (2, 3) transversely to the cylinder axis, **in that** a force which is dependent on the braking pressure (BD) acts on the first piston (2), and **in that** a force (8) which counteracts the braking force (BD) is directed onto the second piston (3).

2. Clamping device according to Claim 1, **characterized in that**, if a first braking-pressure threshold is exceeded, it clamps the safety belt (4) firmly at its current extended length, and **in that**, if a second braking-pressure threshold, which is higher than the first, is exceeded, it tensions the safety belt (6).

3. Clamping device according to Claims 1 and 2, **characterized in that** the force (8) which counteracts the braking pressure (BD) is large enough in order that, if the second braking-pressure threshold is exceeded, the first piston (2) displaces the second piston (3) to the extent that the safety belt (6) clamped in between the two pistons (2, 3) is tensioned.

4. Clamping device according to Claim 1, **characterized in that** a hydraulic unit or pneumatic unit subjects the first piston (2) to the force which is dependent on the braking pressure (BD).

5. Clamping device according to Claim 1, **characterized in that** an electromagnetic actuator, preferably an electromagnet or an electric motor with a linear gear mechanism, which is controlled by the braking pressure (BD), subjects the first piston (2) to force.

## Revendications

1. Dispositif de blocage d'une ceinture de sécurité d'un véhicule automobile, destiné à bloquer la ceinture de sécurité (6) au cours d'une opération de freinage,
**caractérisé en ce qu'**
il se compose d'un cylindre (1) logeant en coulissement un premier et un second piston (2, 3), la ceinture de sécurité (6) traverse des fentes (4, 5) de la paroi du cylindre, transversalement à son axe entre les deux pistons (2, 3), et
le premier piston (2) est soumis à une force dépendant de la pression de frein (BD) et le second piston (3) est soumis à une force (8) s'opposant à celle engendrée par la pression de frein (BD).

2. Dispositif de blocage selon la revendication 1,
**caractérisé en ce qu'**
en cas de dépassement d'un premier seuil de pression de frein, il bloque la ceinture de sécurité (6) à sa longueur d'extraction instantanée et en cas de dépassement d'un second seuil de pression de frein supérieur au premier seuil, il tend la ceinture de sécurité (6).

3. Dispositif de blocage selon les revendications 1 et 2,
**caractérisé en ce que**
la force (8) s'opposant à celle engendrée par la pression de frein (BD) est telle qu'en cas de dépassement du second seuil de pression de frein, le premier piston (2) déplace le second piston (3) jusqu'à ce que la ceinture de sécurité (6), pincée entre les deux pistons (2, 3), soit tendue.

4. Dispositif de blocage selon la revendication 1,
**caractérisé en ce qu'**
un moyen hydraulique ou pneumatique exerce, sur le premier piston (2), une force dépendant de la pression de frein (BD).

5. Dispositif de blocage selon la revendication 1,
**caractérisé par**
un actionneur électromagnétique, de préférence un électro-aimant ou un moteur électrique avec une transmission linéaire commandée par la pression de frein (BD) qui exerce une force sur le premier piston (2).
